# EUROPEAN PATENT SPECIFICATION

(11) **EP 3 129 130 B1**
(45) Date of publication and mention of the grant of the patent: **25.03.2020**
(21) Application number: 15717390.7
(22) Date of filing: 08.04.2015
(51) Int. Cl.: B01D 67/00, B01D 69/04, B01D 71/02

(54) **A METHOD OF MAKING A SUPPORTED GAS SEPARATION MEMBRANE**
VERFAHREN ZUR HERSTELLUNG EINER GETRÄGERTEN GASTRENNUNGSMEMBRAN
PROCÉDÉ DE FABRICATION D'UNE MEMBRANE DE SÉPARATION DE GAZ SUPPORTÉE

(30) Priority: 10.04.2014 US 201461977796 P
(43) Date of publication of application: 15.02.2017
(73) Proprietor: Shell Internationale Research Maatschappij B.V., 2596 HR The Hague (NL)
(72) Inventor: SAUKAITIS, John Charles, Katy, Texas 77450 (US); PRECISE, Eric, Corpus Christi, Texas 78414 (US)
(74) Representative: Shell Legal Services IP
(86) International application number: PCT/US2015/024919
(87) International publication number: WO 2015/157414

(56) References cited:
- WO-A1-2012/082396
- WO-A1-2013/063009
- WO-A1-2013/096186
- WO-A2-2012/082395
- US-A1- 2004 237 780
- SHIN-KUN RYI ET AL: "Repair of Pd-based composite membrane by polishing treatment", INTERNATIONAL JOURNAL OF HYDROGEN ENERGY, ELSEVIER SCIENCE PUBLISHERS B.V., BARKING, GB, vol. 36, no. 21, 27 July 2011 (2011-07-27) , pages 13776-13780, XP028391338, ISSN: 0360-3199, DOI: 10.1016/J.IJHYDENE.2011.07.120 [retrieved on 2011-08-03]

## Description

The invention relates to a method of manufacturing a supported gas separation membrane that is useful in the separation of a specific gas from a mixture of gases.

Composite gas separation modules, which include gas separation membranes, are commonly used to selectively separate specific gases from gas mixtures. These composite gas separation modules can be made of a variety of materials, but some of the more commonly used materials are polymers, ceramics and metallic composites.

Polymer membranes can provide an effective and cost-efficient option for the separation of gases at low temperatures, but they are often unsuitable for high temperature and high pressure gas separation processes. This is because they tend to thermally decompose at higher temperatures. The use of ceramic materials is often not preferred in commercial plant construction due to the ease with which they fracture and the difficulty in obtaining leak-tight seals when using these materials. Such polymer and ceramic membranes are often not capable of meeting tighter environmental regulations and increasing demand for high temperature processing, which can require the application of composite gas separation modules capable of operating at elevated temperatures and providing for high flux and high selectivity.

The prior art discloses various types of and methods for making gas separation membranes that are supported upon porous substrates and that may be used in high temperature gas separation applications. Many of the known techniques for depositing thin, dense, gas-selective membrane layers onto porous substrates use techniques that often leave a surface that is not uniform in thickness. One of these techniques is described in U.S. Patent No. 7175694.

U.S. Patent No. 7175694 discloses a gas separation module that comprises a porous metal substrate, an intermediate porous metal layer, and a dense hydrogen-selective membrane. This patent teaches that the intermediate porous metal layer may be abraded or polished to remove unfavorable morphologies from its surface, and, thereafter, a dense gas-selective metal membrane layer is deposited. Although U.S. Patent No. 7175694 suggests that the purpose of the abrading or polishing operations of the intermediate porous metal layers is to remove unfavorable morphologies from their surface, it does not suggest that polishing of these layers can enhance the ability to seal the metal surface in fewer steps, leading to a thinner, leak-tight metal surface. It also fails to teach anything about the use of certain types of polishing media or conditions to facilitate the overall process of depositing a metal membrane layer upon a support and imposing surface characteristics on the metal membrane layer that provide for sealing and allowing the subsequent placement thereon of a thin, leak-tight, metal membrane layer.

One method for fabricating a palladium composite gas separation module is disclosed in U.S. Patent No. 8167976, which presents a method of making a metallic composite gas separation membrane system. The membrane system can comprise a porous support, and a first membrane layer of a gas-selective material overlaying the porous support, of which a substantial portion of the membrane layer is removed by the use of an ultra-fine abrasive to provide a membrane layer having a reduced membrane thickness. A second gas-selective material is deposited upon the membrane layer having the reduced membrane thickness to provide an overlayer of the second gas-selective material having an overlayer thickness. This method provides for a gas separation membrane system having a membrane layer with a reduced membrane thickness and an overlayer of the overlayer thickness.

Another method is disclosed in U.S. Patent Application Publication 2011/0232821, which describes a method of making a gas separation membrane system by providing a porous support material having deposited thereon a metal membrane layer, and imposing upon the surface thereof certain surface characteristics that provide for its activation. This surface activation enhances the placement thereon of a subsequent metal membrane layer.

WO 2013/096186 A1 describes a method of making a composite gas separation module by providing a porous support material having deposited thereon a metal membrane layer, by imposing upon the surface of the metal membrane layer certain surface characteristics including an abrasion pattern and a relatively high surface roughness that provides for surface activation that enhances the placement thereon of a subsequent metal membrane layer without the use of a chemical activating solution.

WO 2013/063009 A1 discusses a method for preparing a palladium-gold alloy gas separation membrane system comprising a gold-palladium alloy membrane on a porous substrate coated with an intermetallic diffusion barrier. The method includes an abrading step to increase surface roughness of the palladium to a desired range, a gold plating step with a solution of chloroauric acid (AuCl₄H) and hydrogen peroxide, followed by annealing to produce a palladium-gold alloy membrane.

There is a need to find improved methods of making supported gas-permeable metal membranes that are ultra-thin and gas leak-free. Particularly, these methods should be able to provide for the manufacture of an ultra-thin gas-permeable metal membrane with a minimum number of metal plating steps, which also results in reducing the number of other manufacturing steps. Additionally, there is a need to find ways to minimize the membrane metal thickness in order to reduce the amount of expensive metal that is laid down upon the support for the membrane and to provide for a final supported gas-permeable metal membrane having enhanced performance characteristics.

Accordingly, provided herein, in various embodiments, is a method for preparing a gas separation membrane system.

In one aspect, the method comprises:
(a) depositing a film of a gas-selective material comprising a gas-selective metal upon a surface of a tubular porous support, thereby providing the tubular porous support with a gas-selective base membrane layer;
(b) annealing the gas-selective base membrane layer, thereby forming a first annealed gas-selective membrane layer;
(c) forming a first abraded membrane surface by polishing the first annealed gas-selective membrane layer under a first controlled polishing condition with an abrading medium comprising a rotary fibrous buff that includes a plurality of abrasive particles having a size in the range of from 150 mesh to 280 mesh that adhered to a fibrous support with a polymeric binder; and
   wherein the first controlled polishing condition comprises regulation by use of a robotic polisher of the tubular porous support, the tubular porous support being rotated about its axis at a speed within the range of 100 rotations per minute (rpm) to 1000 rpm, while pressing the rotary fibrous buff against the tubular porous support at a contact angle, being the angle that the rotational axis of tubular porous support makes relative to the ground or other point of reference when it is in contact with the rotary fibrous buff, in the range of from 0° to 90° and at a force within the range of from 2 to 9 kg (5 to 20 pounds) when rotating the rotary fibrous buff at a rotation speed within the range of 50 to 2500 rpm and moving the rotary fibrous buff or the tubular support relative to each other at a lateral speed at their point of contact in the range of from 1 millimeter per second (mmps) to 250 mmps for from 1 to 20 repetitions, a repetition being where the rotary fibrous buff remains in contact with the tubular porous support and passes along one full length of the tubular porous support from one end to the other end and back again;
(d) depositing a film of the gas-selective material upon the first abraded membrane surface, thereby forming a first overlaid membrane layer
(e) annealing the first overlaid membrane layer; and
(f) successively iterating operations (c) and (d) until a leak-tight membrane system is formed, a successive abraded membrane surface and a successive overlaid membrane layer being formed at each iteration, each successive overlaid membrane layer being annealed before performing a subsequent iteration.

In some envisioned arrangements, a method comprises depositing a gas-selective membrane layer upon a surface of a tubular porous support; annealing the gas-selective membrane layer, thereby forming an annealed gas-selective membrane layer; polishing the annealed gas-selective membrane layer under a controlled polishing condition with an abrading medium comprising a rotary fibrous buff that includes a plurality of abrasive particles adhered to a fibrous support with a polymeric binder, thereby forming an abraded membrane surface; depositing another gas-selective membrane layer upon the abraded membrane surface of the tubular porous support; and successively iterating the annealing, polishing and depositing operations until a leak-tight membrane system is formed.
FIG. 1 is a front elevation view of a membrane system under robotically controlled polishing conditions, depicting a tubular porous support having a metal membrane layer in relationship to a rotary fibrous buff.
FIG. 2 is a partial side elevation view of the membrane system of FIG. 1 in relationship to the rotary fibrous buff.

In various embodiments, this invention relates to a method of making a gas separation membrane system. The method uses a particular type of an abrading medium under one or more controlled abrading or polishing conditions on one or more gas-selective membrane layers, particularly one or more metal membrane layers comprising a gas-selective metal, that are deposited upon a tubular porous support under conditions that are within specifically defined process parameters. The combination of the physical properties of the abrading medium and the manner or conditions under which the supported gas-selective metal membrane layer(s) is/are abraded or polished provides for fewer required metal plating steps in the preparation of a final tightly-sealed, gas-selective metal membrane layer and for a thinner gas-selective metal membrane layer than would be possible with the use of various prior art methods. In the invention, a robot, specifically a robotic polishing unit, is used to control the manner or conditions under which the gas-selective metal membrane layer is abraded or polished. The use of a robotic polishing unit can provide surprising benefits, as discussed further herein. It is to be recognized that the precise control of the abrading conditions can be achieved with the use of robotic polishing when these abrading conditions are not able to be controlled or attained by other means.

The porous support upon which the gas-selective membrane layer is deposited may include any porous metal material that is suitable for use as a support for the gas-selective material and which is permeable by hydrogen. The porous support is tubular in shape or geometry and has a surface that permits a layer of a gas-selective material to be applied or deposited thereon. Such tubular porous supports have an inside surface and an outside surface that together define a wall thickness, with the inside surface defining a tubular conduit. In various embodiments, the outside diameter (OD) of the tubular porous support can reside in a range of 1.5 cm to 13 cm. In some embodiments, preferably, the outside diameter of the tubular porous support resides in the range of 2.5 cm to 10 cm. In some embodiments, more preferably, the outside diameter of the tubular porous support resides in the range of 3 cm to 8 cm.

Although porous supports that are generally tubular in shape are particularly desirable in the embodiments described herein, it is to be recognized that other support shapes are also possible. For example, in some arrangements, supports that are substantially planar may be converted into a membrane system though modification of the techniques described herein. Such modifications will be evident to one having ordinary skill in the art and the benefit of the present disclosure.

The porous metal material of the tubular porous support can be selected from any of the materials known to those skilled in the art including, but not limited to, the stainless steels, (1) e.g., the 301, 304, 305, 316, 317, and 321 series of stainless steels, (2) the HASTELLOY® alloys, e.g., HASTELLOY® B-2, C-4, C-22, C-276, G-30, X and others, and (3) the INCONEL® alloys, e.g., INCONEL® alloy 600, 625, 690, and 718. The porous metal material, thus, can comprise an alloy that is hydrogen permeable and comprises iron and chromium. The porous metal material may further comprise an additional alloy metal such as nickel, manganese, molybdenum and any combination thereof.

One particularly desirable alloy suitable for use as the porous metal material can comprise nickel in an amount in the range of upwardly to about 70 weight percent of the total weight of the alloy and chromium in an amount in the range of 10 to 30 weight percent of the total weight of the alloy. Another suitable alloy for use as the porous metal material comprises nickel in the range of 30 to 70 weight percent, chromium in the range of 12 to 35 weight percent, and molybdenum in the range of 5 to 30 weight percent, with these weight percents being based on the total weight of the alloy. In some embodiments, the INCONEL and HASTELLOY alloys can be preferred over other alloys.

The thickness (*e.g*., wall thickness as described above), porosity, and pore size distribution of the pores of the porous metal material are properties of the porous support that can be selected in order to provide a gas separation membrane system having a set of desired properties.

It is understood that, as the thickness of the porous support increases, the hydrogen flux across it will tend to decrease when the porous support is used in hydrogen separation applications. Operating conditions, such as pressure, temperature, and fluid stream composition, for example, may also impact the hydrogen flux. In any event, it can be desirable to use a porous support having a reasonably small thickness so as to provide for a high gas flux therethrough.

The wall thickness of the tubular porous support for the typical applications contemplated hereunder can be in the range of about 0.1 mm to about 25 mm. In some embodiments, preferably, the wall thickness can reside in the range of 1 mm to 15 mm. In some embodiments, more preferably, the range can be from 2 mm to 12.5 mm, and, most preferably, from 2.5 mm to 8 mm.

The porosity of the porous metal material can be in the range of 0.01 to about 1. The term porosity is defined herein as the proportion of non-solid volume to the total volume (i.e., non-solid and solid) of the porous metal material. In some embodiments, a more typical porosity can be in the range of 0.05 to 0.8, and, even from 0.1 to 0.6. The pore size distribution of the pores of the porous metal material can vary with the median pore diameter, typically in the range of about 0.1 micron to about 50 microns. More typically, in various embodiments, the median pore diameter of the pores of the porous metal material can reside in the range of 0.1 micron to 25 microns, and most typically, from 0.1 micron to 15 microns.

In the inventive method, there is initially provided a porous support, particularly a tubular porous support, which has been prepared by depositing or placing a metal membrane layer of a gas-selective metal or material on its surface by any suitable means or method known to those skilled in the art. Some of the suitable means or methods for preparing and forming a metal layer or film upon a porous support include those described in U.S. Patent 7175694, U.S. Patent 8167976, and U.S. Patent Application Publication 2011/0232821. Examples of such suitable means or methods for depositing or placing the base metal membrane layer upon a tubular porous support include the deposition of a metal film upon its surface by electroless plating, thermal deposition, chemical vapor deposition, electroplating, spray deposition, sputter coating, e-beam evaporation, ion beam evaporation, 3-D printing techniques with powders, laser additive methods, aerosol jet methods, laser engineered net shaping, aerosol jet application, and spray pyrolysis. Other suitable methods of depositing the metal membrane layer upon a tubular porous support include those disclosed in U.S. Patent 7759711. In some embodiments, a preferred deposition method is electroless plating.

The gas-selective metal or material, as the term is used herein, represents a material that is selectively permeable to a gas when it is in a form of a dense (*i.e.,* having a minimum amount of pinholes, cracks, void spaces, etc. that allow the unhindered passage of gas), thin film. Thus, a dense, thin layer of the gas-selective material can function to selectively allow the passage of a desired gas while preventing passage of other gases. Possible gas-selective metals include palladium, platinum, gold, silver, rhodium, rhenium, ruthenium, iridium, niobium, and alloys of two or more thereof. In a preferred embodiment of the invention, the gas-selective material is a hydrogen-selective metal such as platinum, palladium, gold, silver and combinations thereof, including alloys. In some embodiments, a more preferred gas-selective material is palladium, silver and alloys of palladium and silver. In still other embodiments, a most preferred gas-selective material is palladium.

The typical membrane thickness of the gas-selective metal membrane layer can be in the range of 1 micron to 50 microns. That is, a leak-tight membrane system can have a thickness within the foregoing range. For purposes of this disclosure, a membrane system will be considered to be leak-tight if it can hold a pressure seal at a pressure of about 103 kPa (15 psi) or above. For some gas separation applications, however, a membrane thickness in the upper end of this range may be too thick to provide for a reasonable gas flux that allows for the selection of a desired gas. Also, various prior art manufacturing methods often provide gas separation membrane systems having gas-selective membrane layers that are unacceptably thick, such that they provide for unacceptable gas separation capability. Generally, a membrane thickness that is greater than 20 microns is too large to provide for acceptable separation of hydrogen from a gas stream. Even a membrane thickness greater than 15 microns, or even 10 microns, is not desirable. Accordingly, in some embodiments, the membrane system can have a metal membrane layer thickness of about 20 microns or less, and in other embodiments, the membrane system can have a metal membrane layer thickness of about 10 microns or less.

It is an important aspect of the inventive method that a particular abrading medium is used in its polishing step in combination with controlling the polishing parameters to within specifically defined process conditions. Surprisingly, this combination of features used in the polishing step provides for a surface of the metal membrane layer that is sealed in the fewest possible or a decreased number of plating steps. It accomplishes this by providing for use of the deposited metal of each layer in a more efficient manner than do comparative methods; and, thus, fewer plating steps are required for making an ultra-thin, gas-tight membrane within a membrane system. A reduction in the required number of plating steps to form the ultra-thin, gas-tight membrane is accomplished by better utilization of the deposited metal in the sealing of the metal membrane layers that are formed with each of the plating steps. Not only can thinner gas-tight membrane layers result, but cost savings can also be realized in terms of time, labor and materials costs.

In the inventive method, the abrading medium comprises a rotary fibrous buff, such as a pleated or puckered satin buff, that includes a plurality of abrasive particles adhered to a fibrous support with a polymeric binder. As used herein, the term "satin" refers to the grade of finish that the rotary fibrous buff conveys to a metal surface, not a substance composing the buff itself. Various rotary satin buffs suitable for practicing the present embodiments are described hereinafter.

Any suitable rotary fibrous buff can be used in the context of the embodiments described herein. Examples of suitable rotary fibrous buffs that may be used in practicing the present inventive embodiments can include, for example, 3M Satin Buff wheels, which are sold commercially under the tradename SCOTCH BRITE®. In exemplary embodiments, the abrasive particles can be alumina, specifically alpha alumina particles, in such rotary fibrous buffs. Such rotary fibrous buffs can contain abrasive particles having a particle size ranging between about 150 mesh and about 280 mesh. In some embodiments, the particle size can range between about 150 mesh and about 180 mesh, and in other embodiments, the particle size can range between about 220 mesh and about 280 mesh. In some embodiments, a first polishing operation can be conducted with a first rotary fibrous buff, and one or more subsequent polishing operations can be conducted with a second rotary fibrous buff, where the rotary fibrous buff in each subsequent polishing operation may be the same or different than that of the first polishing operation.

Further description regarding rotary fibrous buffs suitable for use in the embodiments described herein can be found in U.S. Patent 3991526. As described therein, rotary fibrous buffs can comprise layers of nonwoven mats of synthetic organic fibers that are impregnated with a polymeric binder in which abrasive particles are affixed. The fiber layers of such rotary fibrous buffs can be fastened to one another by any suitable technique such as, for example, sewing, stapling, adhesive bonding, clinch rings, and the like. The rotary fibrous buffs are generally circular in shape and contain a peripheral edge that defines a cylindrical surface with which buffing takes place. In some embodiments, the rotary fibrous buffs can be puckered.

Suitable fibers for forming the rotary fibrous buffs described in U.S. Patent 3991526 can include nonwoven fibers that are 8 denier in size or smaller, and range in length from about 1 cm to about 15 cm. In some embodiments, suitable fibers can be about 1 to about 6 denier in size, and range from about 2 cm to about 7.5 cm in length. In some embodiments, the fibers may have a breaking tensile strength of at least about 3.5 grams per denier, and in some embodiments, the breaking tensile strength may be at least about 5 grams per denier.

Particularly suitable fibers for use in the rotary fibrous buffs described in U.S. Patent 3991526 can include those having a melting or decomposition temperature of about 175°C or above, so as to accommodate the frictional heat generated during a buffing operation. Suitable fibers may include those formed from polyamides, polyimides, polyesters, high modulus viscose rayon, acrylic polymers, and co-extruded or co-spun combinations thereof. In some embodiments, the fibers can form a nonwoven mat having a fabric density of about 0.1 to about 0.6 grams/cm³.

For at least the reasons noted above concerning the fibers in the rotary fibrous buffs described in U.S. Patent 3991526, suitable polymeric binders can have a melting or decomposition temperature of about 175°C or above. Suitable polymeric binders can include, for example, acrylate emulsions, acrylonitrile/butadiene polymers, polyvinyl chloride, and polyvinyl alcohol. Co-polymers of the foregoing may also be used in some embodiments. Generally, the polymeric binder comprises about 60% of the weight of the fibers or less, and in some embodiments, the polymeric binder may comprise about 5% to about 60% of the weight of the fibers, or about 30% to about 50% of the weight of the fibers.

Abrasive particles having particle sizes other than those noted above in SCOTCH BRITE® rotary fibrous buffs are also contemplated for use under the various arrangements described herein. Generally, the abrasive particles can be in the range of about 50 microns to about 100 microns in size. Without being bound by any theory or mechanism, it is believed that abrasive particles having a sufficiently small size, particularly those within the foregoing size range, can better promote plugging of open pores in the abraded membrane surface than can larger abrasive particles.

In various embodiments, the abrasive particles adhered to the rotary fibrous buff can comprise aluminium oxide, particularly alpha alumina, which may have a particle size residing in one of the above particle size ranges. Such abrasive particles are found in SCOTCH BRITE® rotary fibrous buffs. Other suitable abrasive particles may include, for example, fused aluminium oxide, heat-treated aluminium oxide, ceramic aluminium oxide, silicon carbide, green silicon carbide, alumina-zirconia, ceria, iron oxide, garnet, diamond, cubic boron nitride, and combinations thereof. It should be recognized that alternative abrasive particles may need to be adjusted in order to be accommodated by the media they are supported upon and to obtain the desired polishing effect. Media longevity may also present an economic consideration. Analysis of such factors will lie within the capabilities of one having ordinary skill in the art and the benefit of this disclosure.

According to the invention, the abrasive particles are adhered to a fibrous support in the rotary fibrous buff. In general, any suitable fibrous support can be used in the context of the inventive methods. In more particular embodiments, the fibrous support can comprise spun polypropylene fibers or spun polyamide fibers (e.g., nylon fibers). Other suitable fibrous supports can include, for example, polyimides, polyester (*e.g*., polyethylene terephthalate), high modulus viscose rayon, acrylic polymers, and the like. Co-extruded and co-spun variants of these fibrous supports may also be used in some embodiments.

A polymeric binder is used to adhere to the abrasive particles to the fibrous support. Illustrative polymeric binders are described in U.S. Patents 3991526 and 5030496. Suitable polymeric binders can include thermoplastic resins, such as, for example, polyesters, polyamides, polyvinyl chloride, acrylonitrile/butadiene, polyvinyl alcohol, and combinations thereof; thermoset resins, such as, for example, phenolic resins, aminoplast resins, urethane resins, epoxy resins, vinyl resins, acrylate resins, acrylated isocyanurate resins, cyanate resins, urea-formaldehyde resins, amine-formaldehyde resins, isocyanurate resins, acrylated urethane resins, acrylated epoxy resins, glue, and combinations thereof; and combinations thereof. In some embodiments, the polymeric binder may comprise a homopolymer or copolymer of vinyl chloride. Suitable co-monomers may include, for example, vinyl acetate, vinylidene chloride, vinyl esters, acrylic acid and esters thereof, and methacrylic acid and esters thereof.

In some embodiments, a silane coupling agent may be included to increase adhesion between the abrasive particles and the polymeric binder. Suitable silane coupling agents will be familiar to one having ordinary skill in the art.

The inventive method involves the use of a robotic polisher for the abrading or polishing step(s). The robotic polisher provides for the precise control of the polishing parameters which generally cannot be well controlled using other means of polishing. The combination of the use of the robotic polisher and the specifically defined abrading medium provides for the sealing of the surface of the membrane system with fewer steps than would otherwise be required in other abrading procedures, while still allowing for the imposition of a favorable surface morphology that allows plating to take place without surface activation. With this combination of features, a thinner, leak-tight membrane system can be imposed upon the surface of a tubular porous support in fewer process steps.

The gas-selective membrane layer may be polished with many of the computer numerically controlled robotic polishers that are available in the industry. The type will depend on the surface to be polished. However, it has been discovered that careful control of the polishing parameters, which also includes the choice of the polishing or abrading medium, can lead to a more rapid sealing of the porous surface than that of the prior art.

Many suitable robotic polishers are offered for commercial sale by a variety of manufacturing entities. Examples of such entities include Yaskawa Motoman Robotics, FANUC America Corporation, and KuKa Robotics, and others. The use of a robotic polisher allows for the precise control of the polishing conditions under which the annealed gas-selective membrane layer is abraded to form an abraded membrane surface. It has been discovered that certain polishing conditions can affect the sealing rate of the surface of the gas-selective membrane layer that lies upon the tubular porous support. These conditions can contribute to surface sealing or densification in fewer metal plating steps. A discussion of the polishing conditions is provided hereinbelow.

In the polishing operation of one embodiment of the invention, the tubular porous support is placed in a computer controlled turning machine means for rotating the tubular porous support about a horizontal axis. The machine allows for control of the rotation speed of the rotary fibrous buff, a part speed (*i.e.*, a rotation rate) of the tubular porous support, a lateral speed of the tubular porous support against the rotary fibrous buff, a force or pressure applied by the rotary fibrous buff to the membrane surface, an angle of contact of the rotary fibrous buff with the membrane surface, and the number of repetitions the rotary fibrous buff makes across the membrane surface. The machine can control the rotation speed of the rotary fibrous buff in a range of 50-2500 rotations per minute (rpm), the part speed in a range of 100-400 rpm or higher, the contact angle in the range of from 0° to 45°, the force applied to the membrane surface in a range of up to 9 kg (20 lbs), the depth of penetration of the rotary fibrous buff in the membrane surface up to about 5 cm, the lateral speed of the tubular porous support against the rotary fibrous buff up to about 250 millimeters per second (mmps), and a number of repetitions back-and-forth across the membrane from of 1 to 4 or more. Generally, the rotary fibrous buff is held in a fixed position and the tubular porous support is spun and moved laterally (*e.g*., with the robotic polishing unit) with respect to the spinning rotary fibrous buff. In alternative embodiments, the tubular porous support can again be spinning but held in a fixed lateral position, and the rotary fibrous buff can be moved laterally with respect to the tubular porous support.

In various embodiments, as discussed above, rotary fibrous buffs suitable for conducting the controlled polishing operations according to the disclosure herein can include SCOTCH BRITE® pleated satin buffs, available from 3M Corporation. Illustrative pleated satin buffs that can be suitable for these purposes include products identified by Universal Product Code (UPC) numbers 00048011602806 and 00048011645339, each of which contain aluminium oxide particulates as abrasive particles. The 00048011602806 product contains alpha alumina particles ranging in size from 150-180 mesh, which are bound by a strong resin that leads to a long life. The 00048011645339 product, in contrast, contains alpha alumina particles ranging in size from 220-280 mesh, which are bound by a resin that is not as rigid as the other product and leads to a shorter lifetime. Each of these products has a diameter of 14 inches. Other rotary fibrous buffs, including other SCOTCH BRITE® products, may also be suitable for practicing the various embodiments described herein.

In a polishing operation utilizing either of the foregoing rotary fibrous buffs, the rotation speed of the rotary fibrous buff can be in a range of 50-2500 (rpm), preferably 1000-2500 rpm. In some embodiments; the part speed can be in a range of 100-1000 rpm, preferably about 100-400 rpm in some embodiments and most preferably about 400 rpm; the contact angle can be about 0°; the force applied to the membrane surface can be in a range of up to 9 kg (20 lbs); the depth of penetration of the rotary fibrous buff in the membrane surface can be up to about 1 cm; the lateral speed of the tubular porous support against the rotary fibrous buff can be up to about 250 mmps, preferably about 1-50 mmps in some embodiments; and a number of repetitions across the membrane surface can be from 1 to 4.

As noted above, the polishing parameters and their control are an important feature of the inventive method. These parameters include rotation speed, part speed, lateral speed, contact angle, force and repetitions, as described further herein. In the inventive method, the conditions under which the polishing operation is conducted are controlled so as to provide the desired polishing effect. Moreover, when multiple deposition and polishing operations are conducted, the polishing parameters can be the same in each polishing operation or they can be different so as to produce a desired polishing effect. Additionally, the rotary fibrous buff used in each polishing operation can be the same or different. Thus, the controlled polishing condition includes the regulation of one or more of the aforementioned polishing parameters.

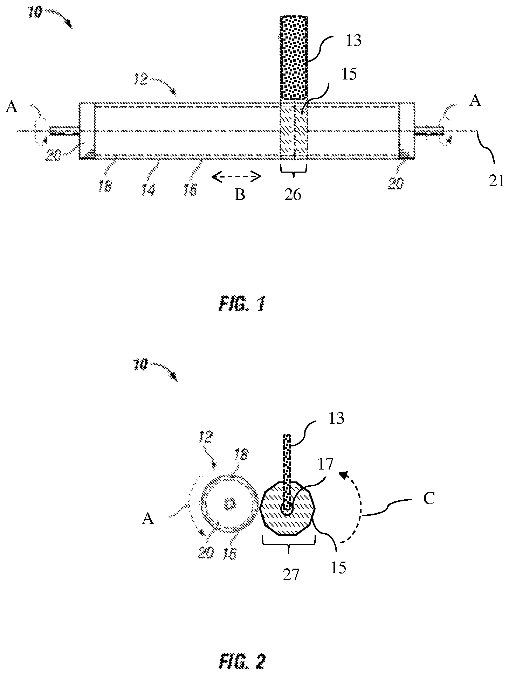

Each of the polishing parameters is defined further below with reference to FIGs. 1 and 2.

Referring to FIG. 1, there is presented a front elevation view of a system 10 containing a tubular porous support 12, having deposited thereon a layer of gas-selective metal membrane 14, and a rotary fibrous buff 15 attached to mounting arm 13. FIG. 2 shows a partial side elevation view of system 10.

The tubular porous support 12 with its metal membrane layer 14 has a surface 16 and a tubular wall 18 having a wall thickness. The tubular porous support 12 is affixed to a turning device or means such as a lathe (not shown) by holding means 20. Holding means 20 may be any suitable means such as a clamping means using, for example, a chuck or collet, or a faceplace with a clamp or any other suitable means for affixing the tubular porous support 12 to a spinning device such as a spindle. The tubular porous support 12 is rotated about its axis 21 in direction A by using the turning device or means.

The rotary fibrous buff 15 may be defined as having a buff width 26 and a buff diameter 27. The rotary fibrous buff 15 includes hole 17, through which a connection to mounting arm 13 is made. For the exemplary SCOTCH BRITE® rotary fibrous buffs described above, the buff width 26 is 1.25 inches and the buff diameter is 14 inches.

During some embodiments of a polishing operation, the tubular porous support 12 is moved laterally in direction B against rotary fibrous buff 15 from one end of the tubular porous support 12 to the other end and back again. In such embodiments, the rotary fibrous buff 15 is held in a fixed lateral position. The lateral transit of the rotary fibrous buff 15 from one end of the tubular porous support 12 to the other end and back again constitutes one repetition, and 1 to 4 repetitions or more can be conducted in the various embodiments described herein. As shown in FIG. 2, the rotary fibrous buff 15 is rotated in direction C while contacting surface 16, while the tubular porous support 12 is rotated in direction A. Generally, directions A and C are in opposition to one another at the point of contact between the rotary fibrous buff 15 and the tubular porous support 12. Rotation in the same direction is also possible, but such a configuration is not believed to be as efficient. Although the FIGs. have depicted directions A and C as being counterclockwise, it is to be recognized that clockwise rotation is also possible in the context of the embodiments described herein.

As also described above, a polishing operation can also involve holding the tubular porous support 12 in a fixed lateral position and moving the rotary fibrous buff 15 laterally along surface 16. In either case, the component in lateral motion (*i.e.*, tubular porous support 12 or rotary fibrous buff 15) can be moved under the influence of a robotic polishing unit (not depicted).

To impose upon surface 16 a desired surface morphology that provides enhanced activation properties for the placement thereon of an additional metal membrane layer, surface 16 is pressed against rotary fibrous buff 15 while tubular porous support 12 is rotating, and tubular porous support 15 can be moved laterally back and forth in direction B while rotary fibrous buff 15 is held in a fixed lateral position. While moving laterally in direction B, the tubular porous support 12 is also rotated in direction A, in opposition to direction C at the point of contact with rotary fibrous buff 15. The force at which the rotary fibrous buff 15 is pressed against the tubular porous support 12, the part speed at which the tubular porous support 12 is rotated about its axis 21 in direction A, the lateral speed at which the tubular porous support 12 is moved in direction B, and the properties of the abrasive particles on the rotary fibrous buff 15 can all be properly adjusted and controlled so as to provide for the desired surface morphology to activate surface 16.

The rotation speed of the rotary fibrous buff is the angular rate at which the rotary fibrous buff makes a complete revolution. The rotation speed of the controlled polishing condition is regulated to within a range of 50 rpm to 2500 rpm. In some embodiments, it is preferred for the rotation speed to be regulated to within the range of 500 rpm to 2400 rpm, and, most preferred, the rotation speed can reside in the range of 1000 rpm to 2400 rpm.

The part speed is the rate of number of revolutions the tubular porous support 12 completes per unit time around axis 21 (*i.e.*, the angular rate), as reported in rpm. The part speed of the controlled polishing condition is regulated to within the range of 100 rpm to 1000 rpm, or in some embodiments 100 rpm to 400 rpm. In some embodiments, it is preferred for the part speed to be regulated to within the range of 150 rpm to 300 rpm, and, most preferred, the part speed can reside in the range of 150 rpm to 200 rpm.

The lateral speed is the linear rate at which the tubular porous support 12 is moved at its contact point against rotary fibrous buff 15, as reported in millimeters per second (mmps). In embodiments where the tubular porous support 12 is held laterally fixed and the rotary fibrous buff 16 is moved laterally, the lateral speed can be similarly defined. The lateral speed of the controlled polishing condition, is regulated to within the range of 1 mmps to 250 mmps. In some embodiments, it is preferred for the lateral speed to be regulated to within the range of 5 mmps to 100 mmps, and, most preferred, the lateral speed can reside in the range of from 30 mmps to 50 mmps.

The contact angle is defined with respect to the position at which the tubular porous support 12 is held when it is in contact with the rotary fibrous buff 15. This position is defined as the angle that the rotational axis of tubular porous support 12 makes relative to the ground or other point of reference when it is in contact with the rotary fibrous buff 15. It is understood that a contact angle of 0° occurs when the rotational axis is parallel with the ground or other point of reference and 90° when the rotational axis is perpendicular to the ground or other point of reference. That is, when the contact angle is 0°, the rotary fibrous buff 15 fully contacts tubular porous support 12, and when the contact angle is 90°, rotary fibrous buff 15 is parallel to tubular porous support 12 and they are not in contact with one another. In between 0° and 90°, only a portion of the surface of rotary fibrous buff 15 contacts tubular porous support 12 during a polishing operation. The contact angle should be in the range of 0 ° to less than 90 °. In some embodiments, it is preferred for the contact angle to be in the range of 0° to 50°, and, most preferred, the contact angle is from 0° to 15°. In some embodiments, the contact angle may be approximately 0° when using a rotary fibrous buff.

The force is the amount of pressure pressed against or being exerted by the tubular porous support 12 at the point of contact with the rotary fibrous buff 15. The force that is applied to the tubular porous support 12, is in the range of 2 kg to 9 kg (5 pounds to 20 pounds). In some embodiments, it is preferred for the applied force to be in the range of 2 kg to 7 kg (5 to 15 pounds), and, most preferred, the applied force can reside in the range of 2 kg to 5 kg (5 pounds to 10 pounds).

A repetition constitutes a full polishing motion with the rotary fibrous buff, with the polishing motion being defined as when the rotary fibrous buff remains in contact with the tubular porous support and passes along one full length of the tubular porous support from one end to the other end and back again. A full polishing motion can be accomplished by moving the tubular porous support laterally with respect to a laterally fixed rotary fibrous buff, or by holding the tubular porous support in a fixed lateral position and laterally moving the rotary fibrous buff. According to the invention, the number of repetitions is in the range of 1 to 20, and, preferably, from 1 to 10, more preferably from 3 to 5. In some embodiments, the number of repetitions may be in the range of 1 to 4.

After the placement of a gas-selective membrane layer upon the surface of the tubular porous support, the gas-selective membrane layer is annealed. This annealing or heat treating may be done in the presence of or under a gaseous atmosphere that can include air, or hydrogen, or oxygen, or any of the inert gases such as nitrogen, helium, argon, neon, carbon dioxide or a combination of any of these. In some embodiments, the gaseous atmosphere can be a mixture of argon, nitrogen and hydrogen, more preferably a mixture of hydrogen and nitrogen, and most preferably hydrogen. The heat treatment may be conducted under temperature and pressure conditions that suitably provide an annealed gas-selective membrane layer. The temperature, thus, can, in some embodiments, be in the range of 350°C to 600°C, preferably, from 400°C to 550°C, and, most preferably, from 450°C to 525°C. The annealing time can range upwardly to 48 hours, but, more typically, the annealing time is from 1 to 24 hours.

In general, the inventive method includes the multiple steps of: 1) depositing a film of a gas-selective material, such as a gas-selective metal membrane, upon a surface of a tubular porous support, thereby providing the tubular porous support with a gas-selective base membrane layer; 2) annealing the gas-selective base membrane layer, thereby forming a first annealed gas-selective membrane layer; 3) forming a first abraded membrane surface by polishing the first annealed gas-selective membrane layer under a first controlled polishing condition with an abrading medium comprising a rotary fibrous buff that includes a plurality of abrasive particles adhered to a fibrous support with a polymeric binder, as described herein; 4) depositing a subsequent film of the gas-selective material upon the first abraded membrane surface of the tubular porous support, thereby forming a first overlaid membrane layer on the first abraded membrane surface; and 5) annealing the first overlaid membrane layer. If the resulting membrane system is not leak-tight at this stage, the annealed first overlaid membrane layer can be abraded and additional layers of the gas-selective material may be added, annealed, polished and annealed again until the membrane system is leak-tight after a final annealing operation. Thus, after the last placement of the gas-selective material upon the tubular porous support (*i.e.,* after depositing the first overlaid membrane layer in operation 4) above), the operations of annealing, followed by polishing, and followed by depositing a subsequent gas-selective membrane layer onto the tubular porous support (*i.e.*, operations 2) through 4) above) are repeated until a final gas-tight membrane system is provided or formed. That is, one or more overlaid membrane layers can be deposited on the gas-selective base membrane layer. One of the advantages of the inventive method is that the number of repeated cycles of plating, annealing, polishing, depositing and annealing required to provide the leak-tight membrane system can be reduced relative to comparative methods, and, the overall membrane thickness can be reduced as well.

In a more specifically defined embodiment of the inventive method, a film of gas-selective material, comprising a gas-selective metal, is deposited upon a surface of a tubular porous support, thereby providing the tubular porous support with a gas-selective base membrane layer. The gas-selective base membrane layer is then annealed to provide a first annealed gas-selective membrane layer. A first abraded membrane surface is then formed by polishing the first annealed gas-selective membrane layer under a first controlled polishing condition with an abrading medium comprising a rotary fibrous buff that includes a plurality of abrasive particles adhered to a fibrous support with a polymeric binder. A film of the gas-selective material is then deposited upon the first abraded membrane surface, thereby forming a first overlaid membrane layer. The first overlaid membrane layer may then be annealed.

After annealing the first overlaid membrane layer the resulting membrane system (*i.e.,* when two gas-selective membrane layers are present), a second series of annealing, polishing and depositing operations is applied to the first overlaid membrane layer. In this second series of operations, the first overlaid membrane layer is annealed, thereby forming a second annealed gas-selective membrane layer. Thereafter, the second annealed gas-selective membrane layer is polished under a second controlled polishing condition with an abrading medium comprising a rotary fibrous buff that includes a plurality of abrasive particles adhered to a fibrous support with a polymeric binder, thereby forming a second abraded membrane surface. A film of the gas-selective material is then placed or deposited upon the second abraded membrane surface, thereby forming a second overlaid membrane layer.

If after applying the second overlaid membrane layer the resulting membrane system is not leak-tight (*i.e.,* when three gas-selective membrane layers are present), a third series of annealing, polishing and depositing operations is applied to the second overlaid membrane layer. In this third series of operations, the second overlaid membrane layer is annealed, thereby forming a third annealed gas-selective membrane layer. Thereafter, the third annealed gas-selective membrane layer is polished under a third controlled polishing condition with an abrading medium comprising a rotary fibrous buff that includes a plurality of abrasive particles adhered to a fibrous support with a polymeric binder, thereby forming a third abraded membrane surface. A film of the gas-selective material is then placed or deposited upon the third abraded membrane surface, thereby forming a third overlaid membrane layer.

If after applying the third overlaid membrane layer the resulting membrane system is still not leak-tight (*i.e.,* when four gas-selective membrane layers are present), a fourth series of annealing, polishing and depositing operations is applied to the third overlaid membrane layer. It is believed that this fourth series of operations should usually be sufficient to provide the leak-tight membrane system. In this fourth series of operations, the third overlaid membrane layer is annealed, thereby forming a fourth annealed gas-selective membrane layer. Thereafter, the fourth annealed gas-selective membrane layer is polished under a fourth controlled polishing condition with an abrading medium comprising a rotary fibrous buff that includes a plurality of abrasive particles adhered to a fibrous support with a polymeric binder, thereby forming a fourth abraded membrane surface. A film of the gas-selective material is then placed or deposited upon the fourth abraded membrane surface, thereby forming a fourth overlaid membrane layer. The fourth overlaid membrane layer can then be annealed to form the membrane system.

More generally, the inventive methods described herein comprises annealing the first overlaid membrane layer, and successively iterating operations of polishing an annealed gas-selective membrane layer to form a successive abraded membrane surface, and depositing a successive overlaid membrane layer on the successive abraded membrane surface. These operations are iterated until a leak-tight membrane system is formed, with each successive overlaid membrane layer being annealed before performing a subsequent iteration. In each polishing operation, the controlled polishing condition includes rotating the rotary fibrous buff.

The following examples are provided to illustrate the invention but are not intended to be limiting.

### Example 1

This Example 1 describes the preparation of a gas separation membrane system using a rotary fibrous buff under the control of a polishing robot capable of precisely controlling the polishing conditions during the polishing step of the preparation method, and it presents the result of the preparation procedure.

A 1 inch OD x 15 inch length x 0.1 inch wall thickness porous HASTELLOY X stainless steel support supplied by Mott Corporation was wrapped above and below membrane with one layer of Teflon tape. The support was generally tubular in shape and was closed on one end.

### Initial Preparation of Tubular Porous Support

Two 500 ml-Erlenmeyer flasks, each containing 0.20-0.25 g of eggshell catalyst, 1 micron centered distribution, were mixed with 250 ml of DI water. The resulting slurry was divided equally between 4 L of DI water in a 5 L glass beaker and 3.5 L of DI water in a 4 L glass beaker. The slurries were well mixed. The porous tube assembly was connected to vacuum and the vacuum adjusted to 25-30" Hg. The porous metal support assembly was immersed into slurry. The additional solution was added until there was no more reserve solution. The support was removed from the slurry solution. Any excess water inside the membrane was removed. The Teflon tape was then removed and the vacuum was disconnected. The support was dried in an air circulating oven for at least 2 hours at 140°C. The support was then reconnected to vacuum at 25-30" Hg. The powder on the surface of the porous section was smoothed, removing excess catalyst, and the vacuum was disconnected.

This process was then repeated with eggshell catalyst having a 0.5 micron centered distribution, with the exception that surface smoothing was omitted in the second deposition operation.

### Plating Operation

The plating solution utilized in this Example comprised 250 grams DI water, 198 ml of 28-30% ammonium hydroxide solution, 4.0 grams of tetraaminepalladium (II) chloride (Pd(NH₃)₄Cl₂H₂O), 40.1 grams ethylenediaminetetraacetic acid disodium salt (Na₂EDTA₂H₂O) and sufficient deionized water to make 1 L total volume to provide a solution with a Pd metal ion concentration of about 4 g/L. A peristaltic pump was utilized to circulate the solution about the support while applying vacuum to the support. Plating took place at a temperature of 50°C for 5-10 minutes under 4-6 inches Hg vacuum and then continuously for 90 minutes. The bath was circulated at a rate of 1.4 L per minute. The membrane assembly was removed from the plating bath and washed with deionized water until the conductivity was less than 5 µS. The membrane was dried in an air circulating oven for at least 2 hours at 140°C and cooled to 40°C.

### Annealing Operation

The membrane assembly was annealed by increasing the temperature from 40°C to 400°C @ 2°C / min. in nitrogen. The gas mixture was transitioned from 100% nitrogen to 100% hydrogen over the period of 1 hour and the heating continued to 520 °C. The membrane assembly was held at this temperature overnight. The membrane assembly was then cooled to 400°C and transitioned back to pure nitrogen and held for 2 hours before cooling to room temperature.

### Polishing Operation

The membrane assembly was polished on a robotic polisher from Acme manufacturing with a SCOTCH BRITE® satin buff (UPC 00048011645339, 3M Corporation) under the conditions specified in Table 1 below. The start and end positions for the rotary fibrous buff on the membrane assembly were the same in all polishing operations. The start and end positions in each iteration were 12 cm and 58 cm, respectively, from the left end of the tubular porous support. In all cases, the tubular porous support was moved laterally with the robotic polishing unit and the rotary fibrous buff was held in a fixed lateral position.

**Table 1**

| **Contact Angle (°)** | **Buff Speed (rpm)** | **Part Speed (rpm)** | **Force (kg /lbs)** | **Depth (cm)** | **Lateral Speed (mm/s)** | **Repetitions** |
|---|---|---|---|---|---|---|
| *1^{st} Polishing* | | | | | | |
| 0 | 1000 | 200 | 5/10 | 4 | 50 | 4 |

| *2^{nd} Polishing* | | | | | | |
|---|---|---|---|---|---|---|
| 0 | 1000 | 200 | 5/10 | 4 | 50 | 4 |

| *3^{rd} Polishing* | | | | | | |
|---|---|---|---|---|---|---|
| 0 | 1000 | 200 | 5/10 | 4 | 50 | 2 |

Start position is the point in cm from the left end of the tube where the polishing media makes contact. End is the farthest point in cm from the left end of the tube that the media will maintain contact with the support. Contact angle represents the angle at which the support is held by the robot during polishing, with 0 being parallel to the ground and perpendicular to the polishing media. Note the contact angle can be adjusted both positively and negatively and achieve the same or similar results. Buff speed represents the physical rotation rate of the rotary fibrous buff in revolutions per minute. Part speed represents how fast the support is rotated by the robot in revolutions per minute. Force represents how much pressure is being exerted on the membrane over a given surface area. Depth represents how far in cm the membrane is pushed into the polishing media. Lateral speed represents the lateral rate at which the robot moves the support against the polishing media in mmps. Repetitions represent one full polishing motion from start to end and back to start again.

The plating, washing, drying, annealing and polishing operations were repeated until a leak tight membrane system was achieved. These operations were repeated 4 times in accomplishing the foregoing in this Example. The sealed membrane was leak-tight, and no leak development was detected at 689 kPa (100 psi) after testing. The membrane had a hydrogen permeance of 40 Nm³/m²/hr/bar.

### Example 2

This Example describes the preparation of comparison gas separation membranes and presents comparison data relating to the properties of the comparison membrane systems and the inventive membrane systems made under the robotic controlled polishing conditions.

The membrane assembly of Example 2 was made according the method described in U.S. Patent 8167976.

The preparation of the membrane assembly was similar to the preparation of the membrane assembly of Example 1 with small differences. In laying down the eggshell catalyst, the steps were repeated three times with progressively smaller eggshell catalyst particle distributions. The respective distributions were 4 µm, 1 µm and 0.5 µm. Surface smoothing was omitted with the last application of the eggshell catalyst. In the annealing operation, a mixture of 3% hydrogen in nitrogen was added and the heating continued to 520°C. The membrane assembly was held at this temperature overnight. The membrane assembly was cooled to 400°C and transitioned back to pure nitrogen and held for 2 hours before cooling to room temperature.

The membrane assembly of this Example was polished on a lathe at 20 rpm with sandpaper attached to a sanding block. Starting near one of the welds at the porous section, pressure was applied to the sanding block against the support. The sandpaper was slowly moved up and across until reaching the opposite end. The process was repeated starting on the other end. Clockwise and counter clockwise rotation was utilized. The motion was repeated until the sandpaper had a smooth shine on it or there was grit missing. Rotation was stopped while switching the sandpaper. The steps were repeated while gradually decreasing sandpaper abrasive size. A micro fiber polishing cloth was utilized to wipe the membrane until the polishing cloth no longer visibly picked up any palladium. The surface of the membrane was lightly cross-hatched using a fresh piece of sandpaper of the smallest size. 1500 and 2000 grit papers were utilized for the polishing operation. The plating, washing, drying, annealing and polishing processes were repeated 8 times until a leak tight membrane assembly was achieved. The membrane had a hydrogen permeance of 20 Nm³/m²/hr/bar and no leak development was detected at 103kPa (15 psi) after testing.

Table 2 below shows additional examples of the prior art method compared to an illustrative sample prepared as described herein.

**Table 2**

| **Sample #** | **Polishing Type** | # **of Platings** | **Sealed** @ 103kPa **(15 psi)?** | **Sealed** @ 689 kPa **(100 psi)?** | **Thickness (µm)** | **Hydrogen Permeance (Nm³/m²/hr/bar)** |
|---|---|---|---|---|---|---|
| Example 1 | Robotic Polishing | 4 | Yes | Yes | 6.04 | 40 |
| Example 2-1 | Lathe/Sandpaper | 6 | Yes | No | 8.04 | 20 |
| Example 2-2 | Lathe/Sandpaper | 8 | Yes | No | 8.67 | 24 |
| Example 2-3 | Lathe/Sandpaper | 6 | Yes | No | 8.69 | 35.05 |
| Example 2-4 | Lathe/Sandpaper | 9 | Yes | No | 13.51 | 27.5 |
| Example 2-5 | Lathe/Sandpaper | 8 | Yes | No | 11.92 | 20 |
| Example 2-6 | Lathe/Sandpaper | 7 | No | No | 7.02 | n/a |

As shown in Table 2, membrane systems prepared in accordance with the inventive method had gas-tight membranes of smaller thickness made with fewer plating steps and which exhibit improve permeance over the comparative membrane systems.

Moreover, the inventive methods can be used to seal a failed membrane system produced by the comparative methods. Specifically, taking the sample of Example 2-6 above and applying one additional plating and polishing with a robotic polisher resulted in a membrane system that was sealed at both 103kPa and 689kPa (15 psi and 100 psi). In the robotic polishing operation, the membrane was polished with both a Trizact A6 belt polisher (3M Corporation) and a SCOTCH BRITE® rotary fibrous buff (UPC 00048011602806, 3M Corporation). The membrane thickness was 7.18 microns and its hydrogen permeance was 33.7 Nm³/m²/hr/bar.

## Claims

1. A method comprising:
(a) depositing a film of a gas-selective material comprising a gas-selective metal upon a surface of a tubular porous support, thereby providing the tubular porous support with a gas-selective base membrane layer;
(b) annealing the gas-selective base membrane layer, thereby forming a first annealed gas-selective membrane layer;
(c) forming a first abraded membrane surface by polishing the first annealed gas-selective membrane layer under a first controlled polishing condition with an abrading medium comprising a rotary fibrous buff that includes a plurality of abrasive particles having a size in the range of from 150 mesh to 280 mesh that adhered to a fibrous support with a polymeric binder; and
wherein the first controlled polishing condition comprises regulation by use of a robotic polisher of the tubular porous support, the tubular porous support being rotated about its axis at a speed within the range of 100 rotations per minute (rpm) to 1000 rpm, while pressing the rotary fibrous buff against the tubular porous support at a contact angle, being the angle that the rotational axis of tubular porous support makes relative to the ground or other point of reference when it is in contact with the rotary fibrous buff, in the range of from 0° to 90° and at a force within the range of from 2 to 9 kg (5 to 20 pounds) when rotating the rotary fibrous buff at a rotation speed within the range of 50 to 2500 rpm and moving the rotary fibrous buff or the tubular support relative to each other at a lateral speed at their point of contact in the range of from 1 millimeter per second (mmps) to 250 mmps for from 1 to 20 repetitions, a repetition being where the rotary fibrous buff remains in contact with the tubular porous support and passes along one full length of the tubular porous support from one end to the other end and back again;
(d) depositing a film of the gas-selective material upon the first abraded membrane surface, thereby forming a first overlaid membrane layer;
(e) annealing the first overlaid membrane layer; and
(f) successively iterating operations (c) and (d) until a leak-tight membrane system is formed, a successive abraded membrane surface and a successive overlaid membrane layer being formed at each iteration, each successive overlaid membrane layer being annealed before performing a subsequent iteration.

2. The method of claim 1, wherein a final successive overlaid membrane layer is annealed after performing a final iteration of operations (c) and (d).

3. The method of claim 1, wherein the abrasive particles range between 150 mesh and 180 mesh in size.

4. The method of claim 1, wherein the leak-tight membrane system has a thickness of 10 microns or less.

5. The method of any one of claims 1 to 4, wherein a rotation rate of the tubular porous support ranges between 100 rpm and 400 rpm.

6. The method of claim 5, wherein a lateral speed of the tubular porous support against the rotary fibrous buff ranges between 1 millimeters per second and 50 millimeters per second.

7. The method of claim 6, wherein the contact angle is in the range of from 0° to 45°.

## Patentansprüche

1. Verfahren, Folgendes umfassend:
(a) Abscheiden eines Films aus einem gasselektiven Material, das ein gasselektives Metall umfasst, auf einer Oberfläche eines rohrförmigen porösen Trägers, wodurch der rohrförmige poröse Träger mit einer gasselektiven Grundmembranschicht versehen wird;
(b) Glühen der gasselektiven Grundmembranschicht, wodurch eine erste geglühte gasselektive Membranschicht gebildet wird;
(c) Ausbilden einer ersten abgeschliffenen Membranoberfläche durch Polieren der ersten geglühten gasselektiven Membranschicht unter einem ersten geregelten Polierzustand mit einem Schleifmedium, umfassend eine faserige Rotationsschleifscheibe, die mehrere Schleifpartikel mit einer Größe im Bereich von 150 mesh bis 280 mesh enthält, die mit einem polymeren Bindemittel an einem faserigen Träger haften; und
wobei der erste geregelte Polierzustand das Regeln durch Verwendung eines Roboterpolierers des röhrenförmigen porösen Trägers umfasst, wobei der röhrenförmige poröse Träger mit einer Geschwindigkeit im Bereich von 100 Umdrehungen pro Minute (U/min) bis 1000 U/min gedreht wird, während die faserige Rotationsschleifscheibe in einem Kontaktwinkel, der der Winkel ist, den die Rotationsachse des röhrenförmigen porösen Trägers relativ zum Boden oder zu einem anderen Bezugspunkt bildet, wenn sie mit dem Rotationsfaserschaber in Kontakt steht, im Bereich von bis 0° bis 90° und mit einer Kraft im Bereich von 2 bis 9 kg (5 bis 20 lb) gegen den röhrenförmigen porösen Träger gedrückt wird, wenn die faserige Rotationsschleifscheibe mit einer Rotationsgeschwindigkeit im Bereich von 50 bis 2500 U/min gedreht wird und die faserige Rotationsschleifscheibe oder der röhrenförmige Träger mit einer Quergeschwindigkeit an ihrem Berührungspunkt im Bereich von 1 Millimeter pro Sekunde (mmps) bis 250 mmps über 1 bis 20 Wiederholungen relativ zueinander bewegt wird, wobei eine Wiederholung vorliegt, wenn die faserige Rotationsschleifscheibe mit dem rohrförmigen porösen Träger in Kontakt verbleibt und entlang einer vollen Länge des rohrförmigen porösen Trägers von einem Ende zum anderen Ende und wieder zurück verläuft;
(d) Abscheiden eines Films aus dem gasselektiven Material auf der ersten abgetragenen Membranoberfläche, wodurch eine erste überlagerte Membranschicht ausgebildet wird;
(e) Glühen der ersten überlagerten Membranschicht; und
(f) aufeinanderfolgendes Wiederholen der Vorgänge (c) und (d), bis ein leckdichtes Membransystem ausgebildet ist, wobei bei jeder Wiederholung eine weitere abgetragene Membranoberfläche und eine weitere überlagerte Membranschicht ausgebildet werden, wobei jede weitere überlagerte Membranschicht vor der Durchführung einer nachfolgenden Wiederholung geglüht wird.

2. Verfahren nach Anspruch 1, wobei eine abschließende aufeinanderfolgende überlagerte Membranschicht nach dem Durchführen einer abschließenden Wiederholung der Vorgänge (c) und (d) geglüht wird.

3. Verfahren nach Anspruch 1, wobei die Schleifteilchen in einem Größenbereich zwischen 150 mesh und 180 mesh liegen.

4. Verfahren nach Anspruch 1, wobei das leckdichte Membransystem eine Dicke von höchstens 10 Mikrometer aufweist.

5. Verfahren nach einem der Ansprüche 1 bis 4, wobei eine Drehzahl des rohrförmigen porösen Trägers im Bereich zwischen 100 U/min und 400 U/min liegt.

6. Verfahren nach Anspruch 5, wobei eine Quergeschwindigkeit des rohrförmigen porösen Trägers gegen die faserige Rotationsschleifscheibe im Bereich zwischen 1 Millimeter pro Sekunde und 50 Millimeter pro Sekunde liegt.

7. Verfahren nach Anspruch 6, wobei der Kontaktwinkel im Bereich von 0° bis 45° liegt.

## Revendications

1. Procédé comprenant :
(a) le dépôt d'un film d'un matériau sélectif par rapport à un gaz comprenant un métal sélectif par rapport à un gaz sur une surface d'un support poreux tubulaire, fournissant ainsi au support poreux tubulaire une couche de membrane de base sélective par rapport à un gaz ;
(b) le recuit de la couche de membrane de base sélective par rapport au gaz, formant ainsi une première couche de membrane sélective par rapport au gaz recuite ;
(c) la formation d'une première surface de membrane abrasée en polissant la première couche de membrane sélective par rapport au gaz recuite dans une première condition de polissage régulée avec un milieu abrasif comprenant un buffle fibreux rotatif qui comporte une pluralité de particules abrasives ayant une taille dans la plage de 150 mesh à 280 mesh ayant adhéré à un support fibreux avec un liant polymère ; et
la première condition de polissage régulé comprenant la régulation par l'utilisation d'un polissoir robotisé du support poreux tubulaire, le support poreux tubulaire étant en rotation autour de son axe à une vitesse dans la plage de 100 tours par minute (tr/min) à 1 000 tr/min, tout en appuyant le buffle fibreux rotatif contre le support poreux tubulaire selon un angle de contact, étant l'angle que fait l'axe de rotation du support poreux tubulaire par rapport au sol ou à un autre point de référence lorsqu'il est en contact avec le buffle fibreux rotatif, dans la plage de 0° à 90° et avec une force dans la plage de 2 à 9 kg (5 à 20 livres) lors de la rotation du buffle fibreux rotatif à une vitesse de rotation comprise entre 50 et 2 500 tr/min et en déplaçant le buffle fibreux rotatif ou support tubulaire l'un par rapport à l'autre à une vitesse latérale à leur point de contact dans la plage d'1 millimètre par seconde (mm/s) à 250 mm/s pour d'1 à 20 répétitions, une répétition étant lorsque le buffle fibreux rotatif reste en contact avec le support poreux tubulaire et passe le long d'une longueur entière du support poreux tubulaire d'une extrémité à l'autre extrémité et inversement ;
(d) le dépôt d'un film du matériau sélectif par rapport à un gaz sur la première surface de membrane abrasée, formant ainsi une première couche de membrane superposée ;
(e) le recuit de la première couche de membrane superposée ; et
(f) des opérations d'itération successives (c) et (d) jusqu'à ce qu'un système de membrane étanche soit formé, une surface de membrane abrasée successive et une couche de membrane superposée successive étant formées à chaque itération, chaque couche de membrane superposée successive étant recuite avant d'effectuer une itération ultérieure.

2. Procédé selon la revendication 1, dans lequel une couche de membrane superposée finale successive est recuite après avoir effectué une itération finale des opérations (c) et (d).

3. Procédé selon la revendication 1, dans lequel les particules abrasives ont une taille dans la plage de 150 mesh à 180 mesh.

4. Procédé selon la revendication 1, dans lequel le système de membrane étanche a une épaisseur de 10 microns ou moins.

5. Procédé selon l'une quelconque des revendications 1 à 4, dans lequel une vitesse de rotation du support poreux tubulaire est dans la plage de 100 tr/min à 400 tr/min.

6. Procédé selon la revendication 5, dans lequel une vitesse latérale du support poreux tubulaire contre le buffle fibreux rotatif est dans la plage d'1 millimètre par seconde à 50 millimètres par seconde.

7. Procédé selon la revendication 6, dans lequel l'angle de contact est compris entre 0° et 45°.
